# EUROPÄISCHE PATENTANMELDUNG

(11) **EP 3 916 868 A1**
(43) Veröffentlichungstag der Anmeldung: **01.12.2021**
(21) Anmeldenummer: 20190528.8
(22) Anmeldetag: 11.08.2020
(51) Int. Cl.: H01M 10/052, H01M 10/0583, H01M 10/0587, H01M 50/545, H01M 50/559, H01M 50/107, H01M 50/538

(54) **ENERGIESPEICHERZELLE UND HERSTELLUNGSVERFAHREN**

(30) Priorität: 29.05.2020 EP 20177599; 19.06.2020 EP 20181273
(71) Anmelder: VARTA Microbattery GmbH, 73479 Ellwangen Jagst (DE)
(72) Erfinder: Ensling, David, 73479 Ellwangen (DE); Pytlik, Edward, 73479 Ellwangen (DE)
(74) Vertreter: Patentanwaltskanzlei Cartagena

(57) **Zusammenfassung**

Bekannt ist eine Energiespeicherzelle (100), die einen Verbund (104) aus bandförmigen Elektroden und Separatoren in Form eines zylindrischen Wickels mit zwei endständigen Stirnseiten (104b, 104c) und einem dazwischen liegenden Wickelmantel (104a) aufweist. Die Elektroden weisen jeweils Stromkollektoren (115,125) auf und sind in dem Verbund versetzt zueinander angeordnet, so dass aus einer der Stirnseiten (104b, 104c) ein Längsrand einer negativen und aus der anderen Stirnseite ein Längsrand einer positiven Elektrode austritt.

Der Verbund (104) ist in einem Gehäuse, das ein metallisches, rohrförmig ausgebildetes Gehäuseteil (101) mit einer endständigen kreisförmigen Öffnung (101c) umfasst, axial ausgerichtet, so dass der Wickelmantel (104a) an der Innenseite (101b) des rohrförmig ausgebildeten Gehäuseteils (101) anliegt. Die Zelle (100) umfasst zur elektrischen Kontaktierung einer der Elektroden ein Kontaktelement (110), das in unmittelbarem Kontakt mit einem der aus einer Stirnseite austretenden Längsränder (115a, 125a) steht und das mit diesem Längsrand bevorzugt durch Verschweißungverbunden ist.

Es wird vorgeschlagen, als Kontaktelement (110) eines mit einem kreisförmigen Rand einzusetzen und mit dem Kontaktelement (110) die endständige kreisförmige Öffnung (101c) des rohrförmig ausgebildeten Gehäuseteils (101) zu verschließen.

## Beschreibung

Die nachstehend beschriebene Erfindung betrifft eine Energiespeicherzelle, die einen Elektroden-Separator-Verbund umfasst.

### ANWENDUNGSGEBIET UND STAND DER TECHNIK

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-lonen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-lonen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-lonen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode/ Separator / positive Elektrode/ Separator / negative Elektrode oder positive Elektrode / Separator/ negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-lonen-Zellen mit möglichst hoher Energiedichte benötigt die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-lonen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einerweiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

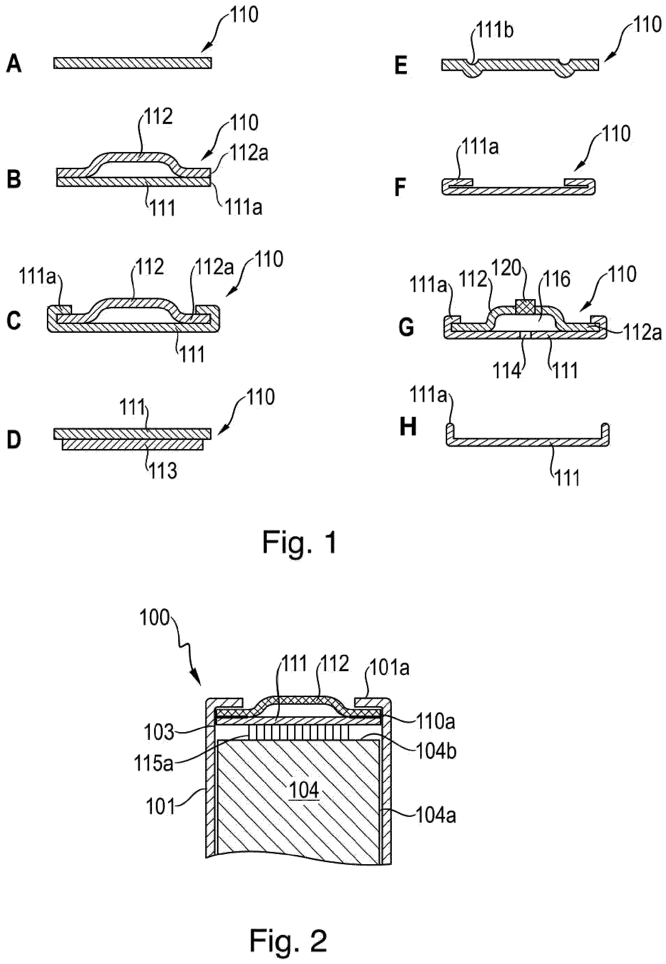

Aus der US 6432574 B1 sind zylindrische Rundzellen bekannt, bei denen gleichfalls als Wickel ausgebildete Elektroden-Separator-Verbünde über stirnseitig aufgeschweißte Kontaktbleche elektrisch kontaktiert werden. In Fig. 2A ist ein typisches Gehäuse zur Aufnahme eines solchen Elektroden-Separator-Verbunds dargestellt. Es umfasst ein becherförmiges Gehäuseteil in dem ein gewickelter Elektroden-Separator-Verbund axial ausgerichtet ist. Verschlossen ist das Gehäuse mittels eines mehrteiligen Deckels, auf dessen Rand eine ringförmige Dichtung aufgezogen ist. Zur Abdichtung des Gehäuses wurde der endständige Rand des Bechers radial nach innen über den Rand des Deckels sowie die darauf aufgezogene Dichtung umgebogen. Zur Unterstützung dieses Prozesses ist die umlaufende tiefe Nut unmittelbar unterhalb des Deckels erforderlich. In diese greift bei der Abdichtung ein Werkzeug ein, damit beim Umbiegen des endständigen Rands von oben und unten ein axialer Druck auf den Deckelrand sowie die Dichtung ausgeübt werden kann. Im Ergebnis wird hierbei die Dichtung zwischen der Nut und der Unterseite des Deckelrands sowie dem umgebogenen Rand des Bechers und der Oberseite des Deckelrands komprimiert, was zu einer effizienten Abdichtung führt. Die benötigte Nut ist allerdings nachteilhaft. Zum einen muss sie nach dem Einschieben des Elektroden-Separator-Verbundes in einem separaten Schritt in das Gehäuse eingebracht werden. Zum anderen bedingtdie Nut ein Totvolumen, das mittels eines Stromleiters überwunden werden muss, um einen elektrischen Kontakt zum Deckel herzustellen. Im Falle der in Fig. 2A dargestellten Zelle wird hierzu ein überlanges Kontaktblech auf die obere Stirnseite aufgeschweißt, umgebogen und an die Innenseite des Deckels geschweißt.

### AUFGABE UND LÖSUNG

Der vorliegenden Erfindung lag die Aufgabe zugrunde, Energiespeicherzellen bereitzustellen, die sich durch eine gegenüber dem Stand der Technik verbesserte Energiedichte sowie eine homogene Stromverteilung möglichst über die gesamte Fläche und Länge ihrer Elektroden auszeichnen und die gleichzeitig hervorragende Charakteristiken bezüglich ihres Innenwiderstands und ihrer passiven Entwärmungsfähigkeiten besitzen. Weiterhin sollen sich die Zellen auch durch eine verbesserte Herstellbarkeit und Sicherheit auszeichnen.

Diese Aufgabe wird durch die Energiespeicherzelle mit den Merkmalen des Anspruchs 1 sowie das Verfahren mit den Merkmalen des Anspruchs 10 gelöst. Bevorzugte Ausgestaltungen der Zelle und des Verfahrens ergeben sich aus den abhängigen Ansprüchen.

Die erfindungsgemäße Energiespeicherzelle weist stets die unmittelbar folgenden Merkmale a. bis j. auf:
a. die Zelle umfasst einen Elektroden-Separator-Verbund mit der Sequenz Anode / Separator / Kathode,
b. der Elektroden-Separator-Verbund liegt in Form eines zylindrischen Wickels mit zwei endständigen Stirnseiten und einem dazwischen liegenden Wickelmantel vor,
c. die Zelle umfasst ein Gehäuse, das ein metallisches, rohrförmig ausgebildetes Gehäuseteil mit einer endständigen kreisförmigen Öffnung umfasst,
d. in dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt,
e. die Anode ist bandförmig ausgebildet und umfasst einen bandförmigen Anodenstromkollektor mit einem ersten Längsrand und einem zweiten Längsrand und zwei Endstücken,
f. der Anodenstromkollektor umfasst einen bandförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist,
g. die Kathode ist bandförmig ausgebildet und umfasst einen bandförmigen Kathodenstromkollektor mit einem ersten Längsrand und einem zweiten Längsrand und zwei Endstücken,
h. der Kathodenstromkollektor umfasst einen bandförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist,
i. die Anode und die Kathode sind innerhalb des Elektroden-Separator-Verbunds derart angeordnet, dass der erste Längsrand des Anodenstromkollektors aus einer der endständigen Stirnseiten und dererste Längsrand des Kathodenstromkollektors aus deranderen der endständigen Stirnseiten austritt,
j. die Zelle umfasst ein zumindest teilweise metallisch ausgebildetes Kontaktelement, das in unmittelbarem Kontakt mit einem der ersten Längsränder steht und das mit diesem Längsrand bevorzugt durch Verschweißung verbunden ist,

### Bevorzugte Ausführungsformen des elektrochemischen Systems

Grundsätzlich umfasst die Erfindung Energiespeicherzellen unabhängig von ihrer elektrochemischen Ausgestaltung. In besonders bevorzugten Ausführungsformen ist die erfindungsgemäße Energiespeicherzelle jedoch eine Lithium-lonen-Zelle, insbesondere eine sekundäre Lithium-lonen-Zelle. Für Anode und Kathode der Energiespeicherzelle können daher im Grunde sämtliche für sekundäre Lithium-lonen-Zellen bekannten Elektrodenmaterialien verwendet werden.

In der negativen Elektrode einer als Lithium-lonen-Zelle ausgebildeten erfindungsgemäßen Energiespeicherzelle können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Weiterhin sich auch dünne Anoden aus metallischem Lithium.

Für die positive Elektrode einer als Lithium-lonen-Zelle ausgebildeten erfindungsgemäßen Energiespeicherzelle kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co₀.₁₆Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer als Lithium-lonen-Zelle ausgebildeten erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Die erfindungsgemäße Energiespeicherzelle umfasst bevorzugt einen Elektrolyten, im Falle einer Lithium-lonen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

### Bevorzugte Ausführungsformen des Separators

Der Elektroden-Separator-Verbund umfasst bevorzugt mindestens einen bandförmigen Separator, besonders bevorzugt zwei bandförmige Separatoren, der oder die jeweils einen ersten und einen zweiten Längsrand sowie zwei Endstücke aufweisen.

Bevorzugt werden die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen Ausführungsformen kann es sich bei dem Separator oder den Separatoren des Verbundes auch um eine oder mehrere Schichten aus einem Festelektrolyten handeln.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellungdes Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststoffolie oder ein Klebeband gebildet sein. Es ist auch möglich, dass der Wickelmantel durch eine oder mehrere Separatorwindungen gebildet ist.

### Bevorzugte Ausführungsformen der Stromkollektoren

Die Stromkollektoren der Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle einer als Lithium-lonen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

Es ist weiterhin bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

Besonders bevorzugt ragt der Rand oder der Längsrand des Anodenstromkollektors aus der Seite des Stapels oder der Stirnseite des Wickels nicht mehr als 2500 µm, besonders bevorzugt nicht mehr als 1500 µm, heraus. Besonders bevorzugt ragt der Rand oder der Längsrand des Kathodenstromkollektors aus der Seite des Stapels oder der Stirnseite des Wickels nicht mehr als 3500 µm, besonders bevorzugt nicht mehr als 2500 µm, heraus.

### Erfindungsgemäße Lösung

Besonders zeichnet sich die Zelle durch die zwei folgenden Merkmale k. und l. aus:
k. das Kontaktelement umfasst einen kreisförmigen Rand,
l. das Kontaktelement verschließt die endständige kreisförmige Öffnung des rohrförmigausgebildeten Gehäuseteils.

Erfindungsgemäß wird also vorgeschlagen, als Kontaktelement eines mit einem kreisförmigen Rand einzusetzen und mit dem Kontaktelement die endständige kreisförmige Öffnung des rohrförmig ausgebildeten Gehäuseteils zu verschließen. Das Kontaktelement dient also nicht nur zum elektrischen Kontaktieren einer Elektrode, vielmehr fungiert es gleichzeitig als Gehäuseteil. Damit geht ein großer Vorteil einher, eine separate elektrische Verbindung zwischen dem Kontaktelement und einem Gehäuseteil ist nämlich nicht mehr erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser hervorragende Entwärmungseigenschaften.

### Bevorzugte Ausführungsformen des Kontaktelements / Elektrische Anbindung des Kontaktelements an den als Wickel ausgebildeten Elektroden-Separator-Verbund

In einer **ersten bevorzugten Erfindungsvariante** zeichnet sich die Energiespeicherzelle durch mindestens eines der vier unmittelbar folgenden Merkmale a. bis d. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Der eine der ersten Längsränder ist mit der Metallscheibe durch Verschweißung verbunden.

Besonders bevorzugt sind alle vier unmittelbar vorstehenden Merkmale a. bis d. in Kombination miteinander realisiert.

In der einfachsten Ausführungsformen handelt es sich bei der Metallscheibe um ein flaches Blechteil mit kreisförmigem Umfang, das sich nur in einer Ebene erstreckt. In vielen Fällen können aber auch aufwendigere Gestaltungen bevorzugt sein. So kann die Metallscheibe profiliert sein, beispielsweise um ihr Zentrum eine oder mehrere kreisförmige Vertiefungen und oder Erhöhungen, bevorzugt in konzentrischer Anordnung, aufweisen, was beispielsweise in einem wellenförmigen Querschnitt resultieren kann. Es ist auch möglich, dass ihre Innenseite einen oder mehrere Stege aufweist. Weiterhin kann die Scheibe einen Rand aufweisen, der radial nach innen umgebogen ist, so dass sie einen doppellagigen Randbereich mit beispielsweise U-förmigem Querschnitt aufweist.

Das Kontaktelement kann aus mehreren Einzelteilen, darunter die Metallscheibe, bestehen, die nicht zwingend alle aus Metall bestehen müssen. In einer besonders bevorzugten Ausführungsform kann das Kontaktelement beispielsweise einen profilierten metallischen Poldeckel mit kreisförmigem Umfang umfassen, der auf die Metallscheibe aufgeschweißt sein kann und näherungsweise oder exakt den gleichen Durchmesser wie die Metallscheibe aufweist, so dass der Rand der Metallscheibe und der Rand des Poldeckels gemeinsam den Rand des Kontaktelements bilden. In einer weiteren Ausführungsform kann der Rand des Poldeckels durch den erwähnten radial nach innen umgebogenen Rand der Metallscheibe umschlossen werden. In bevorzugten Ausführungsformen kann sogar eine Klemmverbindung zwischen den beiden Einzelteilen bestehen.

Damit der Rand der Metallscheibe an der Innenseite des rohrförmig ausgebildeten Gehäuseteils entlang der umlaufenden Kontaktzone anliegen kann, ist es bevorzugt, dass das rohrförmige Gehäuseteil zumindest in dem Abschnitt, in dem der Rand der Metallscheibe anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes des Kontaktelements, insbesondere an den Außendurchmesser der Metallscheibe, angepasst.

Die Verschweißung des Randes der Metallscheibe mit dem rohrförmig ausgebildeten Gehäuseteil kann insbesondere mittels eines Lasers durchgeführt werden. Alternativ ist es aber auch möglich, die Metallscheibe durch Verlötung oder Verklebung zu fixieren.

Ein separates Dichtelement wird bei einer umlaufenden Schweißnaht nicht benötigt. Die Metallscheibe und das rohrförmige Gehäuseteil sind über die Schweißnaht dichtend miteinander verbunden. Darüber hinaus gewährleistet die Schweißverbindung auch eine nahezu widerstandfreie elektrische Verbindung zwischen der Metallscheibe und dem rohrförmigen Gehäuseteil.

In einer **zweiten bevorzugten Erfindungsvariante** zeichnet sich die Energiespeicherzelle durch mindestens eines der fünf unmittelbar folgenden Merkmale a. bis e. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Das Kontaktelement umfasst ein metallisches Kontaktblech mit zwei Seiten, von denen eine in Richtung der Metallscheibe weist und bevorzugt durch Verschweißung mit der Metallscheibe verbunden ist.
e. Der eine der ersten Längsränder liegt unmittelbar an der anderen Seite des Kontaktblechs an und ist mit dieser bevorzugt durch Verschweißung verbunden.

Besonders bevorzugt sind alle fünf unmittelbar vorstehenden Merkmale a. bis e. in Kombination miteinander realisiert.

Bezüglich einiger Merkmale unterscheidet sich die zweite bevorzugte Erfindungsvariante nicht von der ersten, so etwa im Umfang der Merkmale a. bis c.. Zu diesen Merkmalen muss somit auch nicht mehr separat ausgeführt werden. Bezüglich bevorzugter Ausführungsformen dieser Merkmale wird auf die vorstehenden Erläuterungen im Zusammenhang mit der ersten bevorzugten Erfindungsvariante verwiesen.

Die Verschweißung des Randes der Metallscheibe mit dem rohrförmig ausgebildeten Gehäuseteil kann auch hier insbesondere mittels eines Lasers durchgeführt werden. Alternativ ist es aber auch möglich, die Metallscheibe durch Verlötung oder Verklebung zu fixieren.

Im Unterschied zur ersten bevorzugten Erfindungsvariante umfasst das Kontaktelement neben der Metallscheibe allerdings das Kontaktblech gemäß Merkmal d. als weitere Komponente, wobei der eine der ersten Längsränder nicht unmittelbar an der Metallscheibe sondern stattdessen unmittelbar an dem Kontaktblech anliegt. Die Metallscheibe dient zum Verschließen des Gehäuses, während das Kontaktblech den Längsrand des Stromkollektors kontaktiert.

In einer einfachen Ausführungsform handelt es sich bei dem Kontaktblech um ein flaches Blechteil, das sich nur in einer Ebene erstreckt, in anderen Ausführungsformen kann es auch ein profiliertes Blechteil sein. Insbesondere ist auch möglich, dass es auf der mit dem Längsrand in Kontakt stehenden Seite einen oder mehrere Stege oder längliche Vertiefungen aufweist.

Das Kontaktblech kann in einigen bevorzugten Ausführungsforen einen kreisförmigen Umfang aufweisen, zwingend erforderlich ist dies aber keineswegs. In einigen Fällen kann das Kontaktblech beispielsweise ein Metallstreifen sein oder mehrere streifenförmige Segmente aufweisen, die beispielsweise in einer sternförmigen Anordnung vorliegen.

In einigen Ausführungsformen kann ein Kontaktblech verwendet werden, das mindestens einen Schlitz und/oder mindestens eine Perforierung aufweist. Diese können dazu dienen, einer Verformung des Kontaktblechs bei der Herstellung einer Schweißverbindung zu dem ersten Längsrand entgegenzuwirken.

Die zur Metallscheibe weisende Seite des Kontaktblechs ist bevorzugt derart ausgebildet, dass bei einem unmittelbaren Kontakt des Kontaktblechs mit der Metallscheibe eine zweidimensionale Kontaktfläche vorliegt, das Kontaktblech und die Metallscheibe also zumindest bereichsweise flach aufeinander liegen.

Bevorzugt stehen das Kontaktblech und die Metallscheibe in starrem, weiter bevorzugt in starrem, unmittelbarem Kontakt miteinander. In diesem Fall sind sie besonders bevorzugt durch Verschwei-ßung oder Verlötung aneinander fixiert.

In besonders bevorzugten Ausführungsformen ist das Kontaktblech ausgebildet wie die in der WO 2017/215900 A1 beschriebenen Kontaktplatten.

In einer **dritten bevorzugten Erfindungsvariante** zeichnet sich die Energiespeicherzelle durch mindestens eines der sechs unmittelbar folgenden Merkmale a. bis g. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Das Kontaktelement umfasst ein metallisches Kontaktblech mit zwei Seiten, von denen eine in Richtung der Metallscheibe weist.
e. Das Kontaktelement umfasst einen Polstift (108), der an dem Kontaktblech fixiert ist und durch eine Durchbrechung in der Metallscheibe aus dem Gehäuse der Zelle herausgeführt ist.
f. Das Kontaktelement umfasst mindestens ein Isoliermittel, das den Polstift (108) und/oder das Kontaktblech gegen die Metallscheibe elektrisch isoliert.
g. Der eine der ersten Längsränder liegt unmittelbar an der anderen Seite des Kontaktblechs an und ist mit dieser bevorzugt durch Verschweißung verbunden.

Besonders bevorzugtsind alle fünf unmittelbar vorstehenden Merkmale a. bis g. in Kombination miteinander realisiert.

Bezüglich einiger Merkmale unterscheidet sich die dritte bevorzugte Erfindungsvariante nicht von der ersten und der zweiten, so etwa im Umfang der Merkmale a. bis d.. Zu diesen Merkmalen muss somit auch nicht mehr separat ausgeführt werden. Bezüglich bevorzugter Ausführungsformen der Merkmale a. bis c. wird auf die vorstehenden Erläuterungen im Zusammenhang mit der ersten bevorzugten Erfindungsvariante verwiesen. Bezüglich bevorzugter Ausführungsformen des Merkmals d., insbesondere betreffend mögliche Ausgestaltungen des Kontaktblechs, wird auf die vorstehenden Erläuterungen im Zusammenhang mit der zweiten bevorzugten Erfindungsvariante verwiesen.

Die Verschweißung des Randes der Metallscheibe mit dem rohrförmig ausgebildeten Gehäuseteil kann auch hier insbesondere mittels eines Lasers durchgeführt werden. Alternativ ist es aber auch möglich, die Metallscheibe durch Verlötung oder Verklebung zu fixieren.

Im Unterschied zur zweiten bevorzugten Erfindungsvariante umfasst das Kontaktelement bei der dritten Variante allerdings ein den Polstift als weitere Komponente. Dieser ist bevorzugt durch Verschweißung oder Verlötung an dem Kontaktblech fixiert. Gegen die Metallscheibe ist er mittels des Isoliermittels elektrisch isoliert, welches bevorzugt gleichzeitig eine Dichtungsfunktion innehat.

Bei dem Isoliermittel kann es sich vorzugsweise um eine übliche Kunststoffdichtung handeln, die chemisch beständig gegenüber den jeweils verwendeten Elektrolyten sein sollte. Dem Fachmann auf dem Gebiet primärer und sekundärer Energiespeicherelemente sind geeignete Dichtungsmaterialien bekannt. In alternativen bevorzugten Ausführungsformen können auch Gläser sowie keramische und glaskeramische Massen als Isoliermittel verwendet werden.

### Mögliche bevorzugte Ausführungsformen betreffend die Verschweißung von Längsrändern an das Kontaktblech oder die Metallscheibe des Kontaktelements

Sowohl bei der ersten als auch bei der zweiten oder dritten bevorzugten Erfindungsvariante ist ein Längsrand eines Stromkollektors bevorzugt durch Verschweißungan das Kontaktelement angebunden, in einem Fall unmittelbar an die Metallscheibe des Kontaktelements, in anderen Fällen an das Kontaktblech. Nachfolgend werden einige Kontaktierungsvarianten vorgestellt, gemäß denen die Anbindung des Längsrands an das Kontaktblech oder an die Metallscheibe ausgestaltet sein kann.

Das KonzeptderVerschweißungder Rändervon Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

Besonders bevorzugt liegt der eine der ersten Längsränder der Länge nach unmittelbar an der Metallscheibe oder fallweise an dem Kontaktblech an. Dadurch bedingt ergibt sich eine linienartige Kontaktzone, die im Falle der spiralförmig aufgewickelten Elektroden einen spiralförmigen Verlauf aufweist. Es ist bevorzugt, dass entlang dieser linien- und bevorzugt spiralförmigen Kontaktzone mittels geeigneter Schweißverbindungen eine möglichst gleichmäßige Anbindung des Längsrands an die Metallscheibe oder das Kontaktblech besteht. Besonders bevorzugt kann diese Anbindung wie folgt ausgestaltet sein:
- Kontaktierungsvariante 1: Der Längsrand des unmittelbar an der Metallscheibe oder an dem Kontaktblech anliegenden Stromkollektors ist über seine gesamte Länge über eine Schweißnaht durchgehend mit der Metallscheibe oder dem Kontaktblech verbunden.
- Kontaktierungsvariante 2: Der Längsrand des unmittelbar an der Metallscheibe oder an dem Kontaktblech anliegenden Stromkollektors umfasst einen oder mehrere Abschnitte, die jeweils über ihre gesamte Länge über eine Schweißnaht durchgehend mit der Metallscheibe oder dem Kontaktblech verbunden sind. Besonders bevorzugt weisen diese Abschnitte eine Mindestlänge von 5 mm, bevorzugt von 10 mm, besonders bevorzugt von 20 mm, auf.
- Kontaktierungsvariante 3: Der Längsrand des unmittelbar an der Metallscheibe oder an dem Kontaktblech anliegenden Stromkollektors ist über eine Vielzahl von punktförmigen Schweißverbindungen mit der Metallscheibe oder dem Kontaktblech verbunden (sogenannte Multi-Pin-Verbindung).

Selbstverständlich können unterdiesen drei Kontaktierungsvarianten die zweite und die dritte auch miteinander kombiniert werden.

In einer möglichen Weiterbildung der zweiten Kontaktierungsvariante erstrecken sich der oder die mit der Metallscheibe oder dem Kontaktblech über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes.

Es ist besonders bevorzugt, dass sich die Metallscheibe und/oder das Kontaktblech durch mindestens eines der unmittelbar folgenden Merkmale a. und b. auszeichnet:
a. Die verwendete Metallscheibe und/oder das verwendete Kontaktblech weist bevorzugt eine Dicke im Bereich von 50 µm bis 600 µm, bevorzugt im Bereich von 150 µm bis 350 µm, auf.
b. Die Metallscheibe und/oder das Kontaktblech besteht aus legiertem oder unlegiertem Aluminium, legiertem oder unlegiertem Titan, legiertem oder unlegiertem Nickel oder legiertem oder unlegiertem Kupfer, aber gegebenenfalls auch aus Edelstahl (beispielsweise vom Typ 1.4303 oder 1.4404) oder aus vernickeltem Stahl.

Es ist besonders bevorzugt, dass die unmittelbar vorstehenden Merkmale a. und b. in Kombination realisiert sind.

Wenn es sich bei dem Längsrand, der unmittelbar an der Metallscheibe oderfallweise unmittelbar an dem Kontaktblech anliegt, insbesondere daran geschweißt ist, um den Längsrand des Anodenstromkollektors handelt, so bestehen der Anodenstromkollektor und die Metallscheibe oder der Anodenstromkollektor und das Kontaktblech bevorzugt beide aus dem gleichen oderzumindest aus einem chemisch verwandten Material, beispielsweise aus Kupfer und einer Kupferlegierung. Im Falle einer als Lithium-lonen-Zelle ausgebildeten erfindungsgemäßen Energiespeicherzelle wird das Material bevorzugt aus der Gruppe mit Kupfer, Nickel, Titan, Legierungen diese drei Elemente, vernickeltem Stahl und Edelstahl gewählt. Im Fall einer Lithiumtitanat-Anode können der Anodenstromkollektor und die Metallscheibe oder der Anodenstromkollektor und das Kontaktblech aber auch aus Aluminium bestehen.

Wenn es sich bei dem Längsrand, der unmittelbar an der Metallscheibe oder fallweise unmittelbar an dem Kontaktblech anliegt, insbesondere daran geschweißt ist, um den Längsrand des Kathodenstromkollektors handelt, so bestehen der Kathodenstromkollektor und die Metallscheibe oder der Kathodenstromkollektor und das Kontaktblech bevorzugt beide aus dem gleichen oder zumindest aus einem chemisch verwandten Material, beispielsweise aus Aluminium und aus einer Aluminiumlegierung. Dieses wird besonders bevorzugt aus der Gruppe mit legiertem oder unlegiertem Aluminium, Titan, Titanlegierungen und Edelstahl (z.B. vom Typ 1.4404) gewählt.

Wenn das Kontaktelement sowohl die Metallscheibe als auch das Kontaktblech umfasst, so bestehen auch das Kontaktblech und die Metallscheibe aus stofflicher Sicht bevorzugt beide aus dem gleichen oder zumindest aus einem chemisch verwandten Material. Es besteht gleichsam bevorzugt aus dem gleichen Material wie der daran anliegende Stromkollektor oder aus einem chemisch verwandten Material.

Wenn die mit dem Kontaktblech kombiniert ist, besteht sie in einigen bevorzugten Ausführungsformen aus Edelstahl, beispielsweise vom Typ 1.4303 oder 1.4404.

Besonders bevorzugt zeichnet sich die Energiespeicherzelle, insbesondere in den beschriebenen Ausführungsformen der ersten bis dritten bevorzugten Erfindungsvariante, durch mindestens eines der zwei unmittelbar folgenden zusätzlichen Merkmale a. und b. aus:
a. Das rohrförmig ausgebildete Gehäuseteil umfasst in axialer Richtung einen Zentralabschnitt, in dem der Wickelmantel an seiner Innenseite anliegt, sowie einen Kontaktabschnitt, in dem der Rand der Metallscheibe an seiner Innenseite anliegt.
b. Das rohrförmig ausgebildete Gehäuseteil umfasst einen kreisförmigen Rand, der radial nach innen über den Rand des Kontaktelements umgebogen ist.

Entsprechend den obigen Ausführungen zur bevorzugten Ausgestaltung des rohrförmig ausgebildete Gehäuseteils im Bereich der Kontaktzone ist der Kontaktabschnitt bevorzugt zylindrisch oder präziser hohlzylindrisch ausgebildet. Gleiches gilt hinsichtlich der Gestaltung des Zentralabschnitts.

### Gehäusevariante mit Gehäusebecher

In einer besonders bevorzugten Ausführungsform der Erfindung zeichnet sich die Energiespeicherzelle durch mindestens eines der unmittelbar folgenden zusätzlichen Merkmale a. und b. aus:
a. Das rohrförmig ausgebildete Gehäuseteil (101) ist Bestandteil eines Gehäusebechers, der einen kreisförmigen Boden umfasst.
b. Der andere der ersten Längsränder liegt unmittelbar an dem Boden an und ist mit dem Boden bevorzugt durch Verschweißung verbunden.

Besonders bevorzugt sind die unmittelbar vorstehenden Merkmale a. und b. in Kombination realisiert.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung der Längsränder eines Stromkollektors an den Boden eines Gehäusebechers, wie es hier vorgeschlagen wird. Auch diese Maßnahme ermöglicht den Verzicht eines separaten elektrischen Leiters, nunmehr bodenseitig, sowie die Verwendung eines axial verlängerten gewickelten Elektroden-Separator-Verbunds und trägt somit dazu bei, die Energiedichte der erfindungsgemäßen Zelle zu erhöhen und ihre Entwärmungseigenschaften zu verbessern.

Gemäß der vorliegenden Erfindung ist es also möglich und bevorzugt, die aus gegenüberliegenden Stirnseiten eines als Wickel ausgebildeten Elektroden-Separator-Verbunds austretenden Stromkollektorränder von positiver und negativer Elektrode jeweils unmittelbar an ein Gehäuseteil, nämlich den Boden des Bechers und das oben beschriebene, als Verschlusselement fungierende Kontaktelement, anzukoppeln. Die Nutzung des verfügbaren Innenvolumens des Zellgehäuses für aktive Komponenten nähert sich so ihrem theoretischen Optimum.

Der Gehäusebecher weist, insbesondere im Bereich seines Bodens, bevorzugt eine ähnliche Dicke auf wie die Metallscheibe und/oder das Kontaktblech des Kontaktelements, also insbesondere eine Dicke im Bereich von 50 µm bis 600 µm, bevorzugt im Bereich von 150 µm bis 350 µm.

Insbesondere wenn die erfindungsgemäße Zelle als Lithium-lonen-Zelle ausgestaltet ist, hängt die Wahl des Materials, aus dem der Gehäusebecher oder zumindest der Boden des Gehäusebechers gefertigt wird, davon ab, ob der Anoden- oder der Kathodenstromkollektor an den Boden angebunden ist. Bevorzugt sind grundsätzlich die gleichen Materialien, aus denen die Stromkollektoren selbst gefertigt werden. Der Gehäusebecher bzw. der Boden des Gehäusebechers können also aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin kann das Gehäuse aus mehrschichtigen Materialien (engl.: Clad Materials) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen bevorzugt die Innenseite des Gehäusebechers bzw. des Bodens des Gehäusebechers.

Grundsätzlich ist es auch möglich, dass - wie im Falle des Kontaktelements, zwischen dem Längsrand des anderen der ersten Längsränder und dem Boden des Bechers lediglich eine mittelbare Verbindung über ein Kontaktblech besteht. In diesem Fall besteht zwischen dem Längsrand und dem Kontaktblech bevorzugt eine Schweißverbindung gemäß einer der drei oben beschriebenen Kontaktierungsvarianten während das Kontaktblech mit dem Boden bevorzugt durch unmittelbare Verschweißung verbunden ist. Das Kontaktblech ist bevorzugt ausgestaltet wie sein Pendant im Falle des oben beschriebenen Kontaktelements.

Die Ankopplung des anderen der ersten Längsränder an den Boden oder an das Kontaktblech folgt grundsätzlich den gleichen konstruktiven Prinzipien wie im Fall der Ankopplung des einen der ersten Längsränder an das Kontaktelement. Auch hier liegt der Längsrand bevorzugt der Länge nach unmittelbar am Boden an so dass sich eine linienartige Kontaktzone ergibt, die im Falle der spiralförmig aufgewickelten Elektroden einen spiralförmigen Verlauf aufweist. Weiterhin ist auch hier bevorzugt, dass entlang dieser linien- und bevorzugt spiralförmigen Kontaktzone mittels geeigneter Schweißverbindungen eine möglichst gleichmäßige Anbindung des Längsrands an den Boden oder an das Kontaktblech besteht. Diese Anbindung ist bevorzugt gemäß einer der drei oben beschriebenen Kontaktierungsvarianten odereiner Kombination dieser Kontaktierungsvarianten ausgestaltet, also beispielsweise als Multi-Pin-Verbindung.

### Gehäusevariante mit zwei Deckeln

In einer weiteren besonders bevorzugten Ausführungsform der Erfindung zeichnet sich die Energiespeicherzelle durch mindestens eines der drei unmittelbar folgenden zusätzlichen Merkmale a. bis c. aus:
a. Das rohrförmig ausgebildete Gehäuseteil weist eine weitere endständige kreisförmige Öffnung auf.
b. Die Zelle umfasst ein Verschlusselement mit einem kreisförmigen Rand, das diese weitere endständige Öffnung verschließt.
c. Das Verschlusselement für die weitere endständige Öffnung ist oder umfasst eine Metallscheibe, deren Rand dem kreisförmigen Rand des metallischen Verschlusselements entspricht oder diesen mitbildet.

Besonders bevorzugt sind die unmittelbar vorstehenden Merkmale a. bis c. in Kombination realisiert.

In dieser Ausführungsform ersetzt das rohrförmig ausgebildete Gehäuseteil gemeinsam mit einem Verschlusselement einen Gehäusebecher. Das Gehäuse setzt sich also aus drei Gehäuseteilen zusammen, von denen eines rohrförmig ausgebildet ist und die anderen beiden (das Kontaktelement und das Verschlusselement) die endständigen Öffnungen des rohrförmigen Teils als Deckel verschließen. Produktionstechnisch bietet dies Vorteile, da für die Herstellung rohrförmiger Gehäuseteile, anders als bei Gehäusebechern, keine Tiefziehwerkzeuge benötigt werden. Daneben resultieren bei einer unmittelbaren Anbindung des anderen der ersten Längsränder an das Verschlusselement grundsätzlich die gleichen Vorteile wie bei der oben beschriebenen Anbindung an den Boden eines Gehäusebechers.

Das rohrförmig ausgebildete Gehäuseteil ist in dieser Ausführungsform bevorzugt zylindrisch bzw. hohlzylindrisch ausgebildet. Bei dem Verschlusselement handelt es sich, in Analogie zu dem oben beschriebenen Kontaktelement, in der einfachsten Ausführungsform um eine Metallscheibe mit kreisförmigem Umfang, die sich nur in einer Ebene erstreckt, oder alternativ um eine profilierte Metallscheibe, die beispielsweise um ihr Zentrum eine oder mehrere kreisförmige Vertiefungen und/oder Erhöhungen, bevorzugt in konzentrischer Anordnung, aufweist, was beispielsweise in einem wellenförmigen Querschnitt resultieren kann. Gleichfalls bevorzugt kann die Innenseite des Verschlusselements, insbesondere der Metallscheibe, einen oder mehrere Stege aufweist. Weiterhin kann das Verschlusselement, insbesondere die Metallscheibe, auch einen Rand aufweisen, der radial nach innen umgebogen ist, so dass es oder sie einen doppellagigen Randbereich mit beispielsweise U-förmigem Querschnitt aufweist.

In einer weiteren Ausführungsform kann das Verschlusselement, insbesondere die Metallscheibe, auch einen Rand aufweisen, der um 90° umgebogen ist, so dass er einen L-förmigen Querschnitt aufweist.

Bei der Wahl des Materials und der bevorzugten Dicke des Verschlusselements, insbesondere der Metallscheibe, kann gleichfalls auf die obigen Ausführungen zur Metallscheibe des Kontaktelements verwiesen werden. Die dort genannten bevorzugten Merkmale gelten auch für das Verschlusselement.

In einer Weiterbildung dieser besonders bevorzugten Ausführungsform zeichnet sich die Energiespeicherzelle durch mindestens eines der unmittelbar folgenden Merkmale a. bis c. aus:
a. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
b. Der Rand der Metallscheibe ist mit dem rohrförmig ausgebildeten Gehäuseteil über eine umlaufende Schweißnaht verbunden.
c. Das rohrförmig ausgebildete Gehäuseteil umfasst einen kreisförmigen Rand, der radial nach innen über den Rand des Verschlusselements, insbesondere den Rand der Metallscheibe, umgebogen ist.

Besonders bevorzugt sind die unmittelbar vorstehenden Merkmale a. und b., gegebenenfalls auch die unmittelbar vorstehenden Merkmale a. bis c., in Kombination realisiert.

Gemäß dieser Weiterbildung ist es also bevorzugt, das Verschlusselement durch Verschweißung in derweiteren endständigen Öffnungzu fixieren. Ein separates Dichtelement wird bei einerumlaufenden Schweißnaht auch hier nicht benötigt.

Das radiale Umbiegen des Randes des Verschlusselements ist eine fakultative Maßnahme, die zum Fixieren des Verschlusselements nicht benötigt wird, ungeachtet dessen aber zweckmäßig sein kann.

In einer Weiterbildung zeichnet sich die Energiespeicherzelle gemäß der weiteren besonders bevorzugten Ausführungsform der Erfindung durch eines der unmittelbar folgenden Merkmale a. bis c. aus:
a. Der andere der ersten Längsränder liegt unmittelbar an der Metallscheibe an und ist mit der Metallscheibe bevorzugt durch Verschweißung verbunden.
b. Der andere der ersten Längsränder ist an ein Kontaktblech geschweißt, das unmittelbar an der Metallscheibe anliegt.

Grundsätzlich ist es auch hier möglich, dass - wie im Falle des Kontaktelements, zwischen dem Längsrand des anderen der ersten Längsränder und der Metallscheibe bzw. dem Verschlusselement lediglich eine mittelbare Verbindung über ein Kontaktblech besteht. In diesem Fall besteht zwischen dem Kontaktblech und dem Verschlusselement, insbesondere der Metallscheibe des Verschlusselements, bevorzugt eine Verbindung durch unmittelbare Verschweißung. Das Kontaktblech ist bevorzugt ausgestaltet wie sein Pendant im Falle des oben beschriebenen Kontaktelements. Insbesondere gilt, dass eine zur Metallscheibe des Verschlusselements weisende Seite des Kontaktblechs in unmittelbarem Kontakt mit der Metallscheibe steht so dass eine zweidimensionale Kontaktfläche vorliegt, das Kontaktblech und die Metallscheibe des Verschlusselements also zumindest bereichsweise flach aufeinander liegen.

Bei der Wahl des Materials und der bevorzugten Dicke des Kontaktblechs kann auch hier auf die obigen Ausführungen zum Kontaktblech des Kontaktelements verwiesen werden. Die dort genannten bevorzugten Merkmale gelten auch für das Kontaktblech des Verschlusselements.

Die Ankopplung des anderen der ersten Längsränder an die Metallscheibe oder das Kontaktblech des Verschlusselements folgt grundsätzlich den gleichen konstruktiven Prinzipien wie im Fall der Ankopplung des einen der ersten Längsränder an das Kontaktelement. Auch hier liegt der Längsrand bevorzugt der Länge nach unmittelbar an der Metallscheibe oder an dem Kontaktblech an, so dass sich eine linienartige Kontaktzone ergibt, die im Falle der spiralförmig aufgewickelten Elektroden einen spiralförmigen Verlauf aufweist. Weiterhin ist auch hier bevorzugt, dass entlang dieser linien- und bevorzugt spiralförmigen Kontaktzone mittels geeigneter Schweißverbindungen eine möglichst gleichmäßige Anbindung des Längsrands an die Metallscheibe oder das Kontaktblech des Verschlusselements besteht. Diese Anbindung ist bevorzugt gemäß einer der drei oben beschriebenen Kontaktierungsvarianten oder einer Kombination dieser Kontaktierungsvarianten ausgestaltet, also beispielsweise als Multi-Pin-Verbindung.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch Verschweißung, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Energiespeicherzelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die bandförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die bandförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt bandförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der Energiespeicherzelle

Bei der erfindungsgemäßen Energiespeicherzelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Lithium-lonen-Zelle ausgebildeten erfindungsgemäßen Knopfzelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Energiespeicherzelle jedoch eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Energiespeicherzellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als Lithium-lonen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-lonen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-lonen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2,Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 2 m, bevorzugt von nicht mehr als 1,5 m,
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 3 m, bevorzugt von nicht mehr als 2,5 m,
auf.

### Herstellungsverfahren

Das erfindungsgemäße Verfahren zur Herstellung einer Energiespeicherzelle mit den beschriebenen Merkmalen zeichnet sich stets durch die folgenden Schritte aus:
a. Bereitstellung eines Elektroden-Separator-Verbunds mit der Sequenz Anode / Separator / Kathode, der in Form eines zylindrischen Wickels mit zwei endständigen Stirnseiten und einem dazwischen liegenden Wickelmantel vorliegt, wobei die Elektroden jeweils einen mit einem Elektrodenmaterial beschichteten Stromkollektor mit einem ersten Längsrand und einem zweiten Längsrand und zwei Endstücken aufweisen und einer der Längsränder aus einer der endständigen Stirnseiten austritt,
b. Bereitstellung eines rohrförmig ausgebildeten Gehäuseteils, das eine endständige kreisförmige Öffnung aufweist,
c. Bereitstellung eines zumindest teilweise metallisch ausgebildeten Kontaktelements, das einen kreisförmigen Rand aufweist,
d. Verschweißen des einen aus der Stirnseite austretenden Längsrands mit dem Kontaktelement oder einer metallischen Komponente des Kontaktelements,
e. Einschieben des Elektroden-Separator-Verbunds mitsamt dem Kontaktelement durch die kreisförmige Öffnung in das rohrförmig ausgebildete Gehäuseteil, so dass der Wickelmantel an der Innenseite des rohrförmig ausgebildeten Gehäuseteils anliegt und der Rand des Kontaktelements entlang einer umlaufenden Kontaktzone an der Innenseite des rohrförmig ausgebildeten Gehäuseteils anliegt, und
f. Fixieren des Randes des Kontaktelements an der Innenseite des rohrförmig ausgebildeten Gehäuseteils.

Die aufgeführten Schritte müssen nicht zwingend in der angegebenen Reihenfolge getätigt werden. So ist es beispielsweise möglich, die Schritte d. und e. in der Reihenfolge zu vertauschen.

Bezüglich bevorzugter Ausgestaltungen des Elektroden-Separator-Verbunds, des rohrförmig ausgebildeten Gehäuseteils und des Kontaktelements sowie des Verschweißens des aus der Stirnseite austretenden Längsrands wird auf die obenstehenden Ausführungen im Zusammenhang mit der erfindungsgemäßen Energiespeicherzelle Bezug genommen.

In einer bevorzugten Ausführungsform zeichnet sich das Verfahren zusätzlich durch mindestens einen der unmittelbar folgenden Schritte aus:
a. Das Fixieren erfolgt mittels Verschweißung, Verlötung oder Verklebung.
b. Nach dem Fixieren wird der Öffnungsrand der endständigen kreisförmigen Öffnung radial nach innen über den Rand des Kontaktelements umgebogen.

In Übereinstimmung mit den obigen Ausführungen zur erfindungsgemäßen Energiespeicherzelle ist das Fixieren mittels Verschweißung besonders bevorzugt. Das Umbiegen des Randes ist in der Regel nicht zum Abdichten oder Schließen erforderlich. Es kann aber beispielsweise geboten sein, um die Höhe der Energiespeicherzelle zu kalibrieren.

Weiterhin zeichnet sich das erfindungsgemäße Verfahren in bevorzugten Ausführungsformen durch mindestens eines der unmittelbar folgenden Merkmale a. und b. aus:
a. Der Elektroden-Separator-Verbund wird mit einem Elektrolyten getränkt, wobei der Elektrolyt durch eine dafür vorgesehene Durchbrechung in dem Kontaktelement oder einem anderen Gehäuseteil eingefüllt wird.
b. Nach dem Einfüllen des Elektrolyten wird die Durchbrechung verschlossen, beispielsweise durch Verklebung oder Verschweißung.
c. Der Verschluss erfolgt unter Verwendung einer Überdrucksicherung.

Besonders bevorzugt sind zumindest die unmittelbar vorstehenden Schritte a. und b., in einigen Ausführungsformen sogar die unmittelbar vorstehenden Schritte a. bis c., in Kombination realisiert.

Zur Realisierung des Merkmals c. kann der Verschluss der Durchbrechung beispielsweise durch Aufschweißen eines Blechs erfolgen, das eine Berstmembran, ein Berstkreuz oder eine ähnliche Sollrissstelle umfasst, die bei einem definierten Überdruck in der Zelle aufreißen kann um eine Explosion der Zelle zu verhindern.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 verschiedene Ausführungsformen eines Kontaktelements einer erfindungsgemäßen Energiespeicherzelle (Querschnittsdarstellungen),
- Fig. 2 eine Teildarstellung einer erfindungsgemäßen Energiespeicherzelle gemäß der oben beschriebenen ersten bevorzugten Erfindungsvariante (Querschnittsdarstellung),
- Fig. 3 eine Teildarstellung einer erfindungsgemäßen Energiespeicherzelle gemäß der oben beschriebenen zweiten bevorzugten Erfindungsvariante (Querschnittsdarstellung),
- Fig. 4 eine Teildarstellung einer erfindungsgemäßen Energiespeicherzelle gemäß der oben beschriebenen dritten bevorzugten Erfindungsvariante (Querschnittsdarstellung),
- Fig. 5 eine weitere Teildarstellung einer erfindungsgemäßen Energiespeicherzelle gemäß der oben beschriebenen dritten bevorzugten Erfindungsvariante (Querschnittsdarstellung),
- Fig. 6 eine Illustration von Schweißverbindungen zur Anbindung eines Längsrandes eines Stromkollektors an ein Kontaktblech einer erfindungsgemäßen Energiespeicherzelle (Draufsicht von oben), und
- Fig. 7 eine weitere bevorzugte Ausführungsform einer erfindungsgemäßen Energiespeicherzelle gemäß der oben beschriebenen dritten bevorzugten Erfindungsvariante (Querschnittsdarstellung).

In **Fig. 1** finden sich Querschnittsdarstellungen verschiedener Ausführungsformen A bis H von Kontaktelementen 110, sie sich zum Verschließen erfindungsgemäßer Energiespeicherzellen 100 eignen. Im Einzelnen:
A Hier ist die einfachste Ausführungsform eines Kontaktelements 110 gemäß der Erfindung dargestellt, nämlich eine flache Metallscheibe mit kreisrundem kreisförmigem Umfang, welche sich nur in einer Ebene erstreckt. Die Metallscheibe kann beispielsweise aus Aluminium bestehen.
B Das hier dargestellte Kontaktelement 110 umfasst die Metallscheibe 111 und den metallischen Poldeckel 112. Die Metallscheibe 111 und der Poldeckel 112 weisen jeweils einen kreisförmigen Umfang und einen identischen Durchmesser auf. Während sich die Metallscheibe 111 nur in einer Ebene erstreckt, weist der Poldeckel 112 eine zentrale Wölbung auf. Die beiden Teile 111 und 112 des Kontaktelements 110 sind bevorzugt durch eine Verschweißung (nicht dargestellt) miteinander verbunden.
C Das hier dargestellte Kontaktelement 110 umfasst die Metallscheibe 111 und den metallischen Poldeckel 112. Der Poldeckel 112 ist analog zu dem Poldeckel in B ausgebildet. Allerdings ist der Rand 111a der Metallscheibe 111 hier radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Ungeachtet dessen ist es bevorzugt, wenn die Metallscheibe 111 und der Poldeckel 112 zusätzlich miteinander verschweißt sind.
D Das hier dargestellte Kontaktelement 110 umfasst die Metallscheibe 111 und das metallische Kontaktblech 113. Das Kontaktblech 113 liegt flach an der Metallscheibe 111 an und ist mit dieser vorzugsweise verschweißt. Die Metallscheibe 111 kann beispielsweise aus Edelstahl bestehen, das Kontaktblech 113 beispielsweise aus einer Aluminiumlegierung.
E Das hier dargestellte Kontaktelement 110 umfasst lediglich eine Metallscheibe. Diese weist im Unterschied zu der in A dargestellten Metallscheibe auf ihrer Oberseite eine kreisförmige Vertiefung 111b sowie auf ihrer Unterseite eine dazu korrespondierende Erhöhung auf, ist also profiliert.
F Das hier dargestellte Kontaktelement 110 umfasst lediglich eine Metallscheibe. Diese weist im Unterschied zu der in A dargestellten Metallscheibe einen radial nach innen umgeschlagenen Rand 111a und in der Folge einen doppellagigen Randbereich auf.
G Das hier dargestellte Kontaktelement 110 umfasst die Metallscheibe 111 und den metallischen Poldeckel 112, der eine zentrale Wölbung aufweist. Der Rand 111a der Metallscheibe 111 ist radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Bevorzugt sind die Ränder 111a und 112a der Metallscheibe 111 und des Poldeckels 112 zusätzlich durch eine umlaufende Verschweißung (nicht dargestellt) miteinander verbunden. Im Zentrum der Metallscheibe 111 findet sich das Loch 114, durch das ein Hohlraum 116 zugänglich ist, der von der Metallscheibe 111 und dem Poldeckel 112 eingeschlossen ist. In den Poldeckel 112 ist eine Überdrucksicherung 120 integriert, die bei einem Überdruck im Hohlraum 116 auslösen kann. Bei der Überdrucksicherung 120 kann es sich im einfachsten Fall um eine Sollrissstelle handeln.
H Das hier dargestellte Kontaktelement umfasst lediglich eine Metallscheibe 111. Diese weist einen um 90° umgebogenen Rand 111a mit L-förmigem Querschnitt auf.

Verschlusselemente gemäß der vorliegenden Erfindung, die im Rahmen der oben beschriebenen Gehäusevariante mit zwei Deckeln zum Einsatz kommen können, können bevorzugt ebenso gemäß den Ausführungsformen A bis H ausgestaltet sein.

Die in **Fig. 2** dargestellte Energiespeicherzelle 100 ist ein Beispiel für die oben beschriebene erste bevorzugte Erfindungsvariante. Sie umfasst das in Fig. 1B dargestellte Kontaktelement 110, dessen Rand 110a von den Rändern 111a und 112a der Metallscheibe 111 und des metallischen Poldeckels 112 gebildet wird. Das Kontaktelement 110 bildet gemeinsam mit dem hohlzylindrisch ausgebildeten, metallischen Gehäuseteil 101 das Gehäuse der Energiespeicherzelle 100 und verschließt eine endständige Öffnung des Gehäuseteils 101. Der Rand 110a des Kontaktelements liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweißnaht verbunden. Der Rand 101a des Gehäuseteils 101 ist radial nach innen über den Rand 110a des Kontaktelements 110 umgebogen.

In dem Gehäuse ist der spiralförmig gewickelte Elektroden-Separator-Verbund 104 axial ausgerichtet, so dass sein Wickelmantel 104a an der Innenseite des rohrförmig ausgebildeten Gehäuseteils 101 anliegt. Aus der obenliegenden Stirnseite 104b des als Wickel ausgebildeten Elektroden-Separator-Verbunds 104 tritt die Längsrand 115a des Anodenstromkollektors aus. Dieser ist beispielsweise über eine Multi-Pin-Verbindung unmittelbar an die Unterseite der Metallscheibe 111 geschweißt.

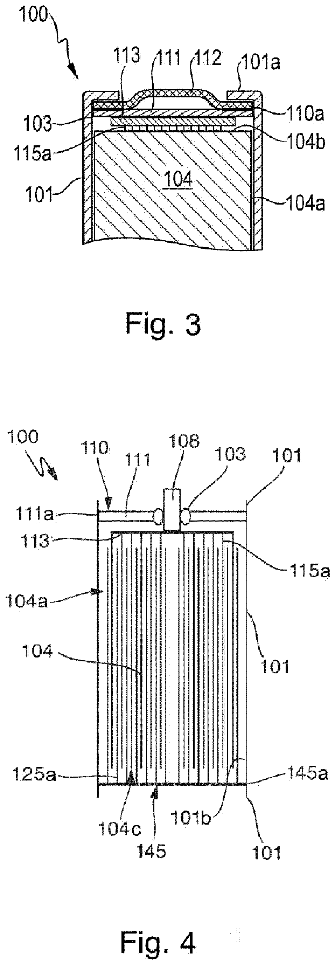

Die in **Fig. 3** dargestellte Energiespeicherzelle 100 ist ein Beispiel für die oben beschriebene zweite bevorzugte Erfindungsvariante. Sie umfasst das in Fig. 1B dargestellte Kontaktelement 110, dessen Rand 110a von den Rändern 111a und 112a der Metallscheibe 111 und des Poldeckels 112 gebildet wird. Das Kontaktelement 110 bildet gemeinsam mit dem hohlzylindrisch ausgebildeten, metallischen Gehäuseteil 101 das Gehäuse der Energiespeicherzelle 100 und verschließt eine endständige Öffnung des Gehäuseteils 101. Der Rand 110a des Kontaktelements liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweißnaht verbunden. Der Rand 101a des Gehäuseteils 101 ist radial nach innen über den Rand 110a des Kontaktelements 110 umgebogen.

Das Kontaktelement 110 umfasst weiterhin ein metallisches Kontaktblech 113 mit zwei Seiten, von denen eine in Richtung der Metallscheibe 111 weist, sogar flach an ihr anliegt, und durch Verschwei-ßung mit der Metallscheibe 111 verbunden ist.

In dem Gehäuse ist der spiralförmig gewickelte Elektroden-Separator-Verbund 104 axial ausgerichtet, so dass sein Wickelmantel 104a an der Innenseite des rohrförmig ausgebildeten, metallischen Gehäuseteils 101 anliegt. Aus der obenliegenden Stirnseite 104b des als Wickel ausgebildeten Elektroden-Separator-Verbunds 104tritt die Längsrand 115a des anodenstromkollektors aus. Dieser liegt unmittelbar an der Unterseite des Kontaktblechs 113 an und ist beispielsweise über eine Multi-Pin-Verbindung mit der Unterseite des Kontaktblechs 113 verschweißt.

Die in **Fig. 4** dargestellte Energiespeicherzelle 100 ist ein Beispiel für die oben beschriebene dritte bevorzugte Erfindungsvariante. Sie umfasst den Elektroden-Separator-Verbund 104, der axial in das hohlzylindrisch ausgebildete Gehäuseteil 101 eingeschoben ist, so dass sein Wickelmantel 104a an der Innenseite 101b des rohrförmig ausgebildeten Gehäuseteils 101 anliegt. Der Elektroden-Separator-Verbund 104 umfasst eine bandförmige Anode und eine bandförmige Kathode, die spiralförmig aufgewickelt sind. Die Anode umfasst einen bandförmigen Anodenstromkollektor und einen bandförmigen Kathodenstromkollektor. Der Anodenstromkollektor ist mit einer Schicht aus negativem Elektrodenmaterial beladen. Der Kathodenstromkollektor ist mit einer Schicht aus positivem Elektrodenmaterial beladen.

Aus der obenliegenden Stirnseite 104b des als Wickel ausgebildeten Elektroden-Separator-Verbunds 104 tritt der Längsrand 115a des Anodenstromkollektors aus. Aus der untenliegenden Stirnseite 104c des als Wickel ausgebildeten Elektroden-Separator-Verbunds 104 tritt der Längsrand 125a des Kathodenstromkollektors aus.

Die Energiespeicherzelle 100 umfasst das rohrförmig und hohlzylindrisch ausgebildete, metallische Gehäuseteil 101, das zwei endständige Öffnungen aufweist. Die obenliegende Öffnung ist durch die Metallscheibe 111 verschlossen, die derart in dem rohrförmig ausgebildeten Gehäuseteil 101 angeordnet ist, dass ihr Rand 111a entlang einer umlaufenden Kontaktzone an der Innenseite 101b des rohrförmig ausgebildeten Gehäuseteils 101 anliegt. Der Rand 111a der Metallscheibe 111 ist mit dem rohrförmig ausgebildeten Gehäuseteil 101 über eine umlaufende Schweißnaht verbunden.

Die Metallscheibe 111 ist Bestandteil eines Kontaktelements 110, das neben der Metallscheibe 111 das metallische Kontaktblech 113 und den Polstift 108 umfasst. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, liegt der Längsrand 115a unmittelbar an. Der Längsrand 115a ist mit dem Kontaktblech 113 durch Verschweißung verbunden. Der Polstift 108 ist an das Kontaktblech 113 geschweißt und durch eine zentrale Durchbrechung in der Metallscheibe 111 aus dem Gehäuse der Zelle 100 herausgeführt.

Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert.

Die untenliegende Öffnung des Gehäuseteils 101 ist mit dem Verschlusselement 145 verschlossen. Bei dem Verschlusselement 145 handelt es sich um eine Metallscheibe, deren Rand 145a entlang einer umlaufenden Kontaktzone an der Innenseite 101b des rohrförmig ausgebildeten Gehäuseteils 101 anliegt. Der Rand 145a des Verschlusselements 145 ist mit dem rohrförmig ausgebildeten Gehäuseteil 101 über eine umlaufende Schweißnaht verbunden.

An der innenliegenden (oberen) Seite des Kontaktblechs 113 liegt der Längsrand 125a des Kathodenstromkollektors unmittelbar an. Der Längsrand 125a ist mit dem Kontaktblech 113 durch Verschweißung verbunden. Die Verschweißung kann beispielsweise mittels eines Laser durch die Metallscheibe des Verschlusselements 145 hindurch bewirkt werden.

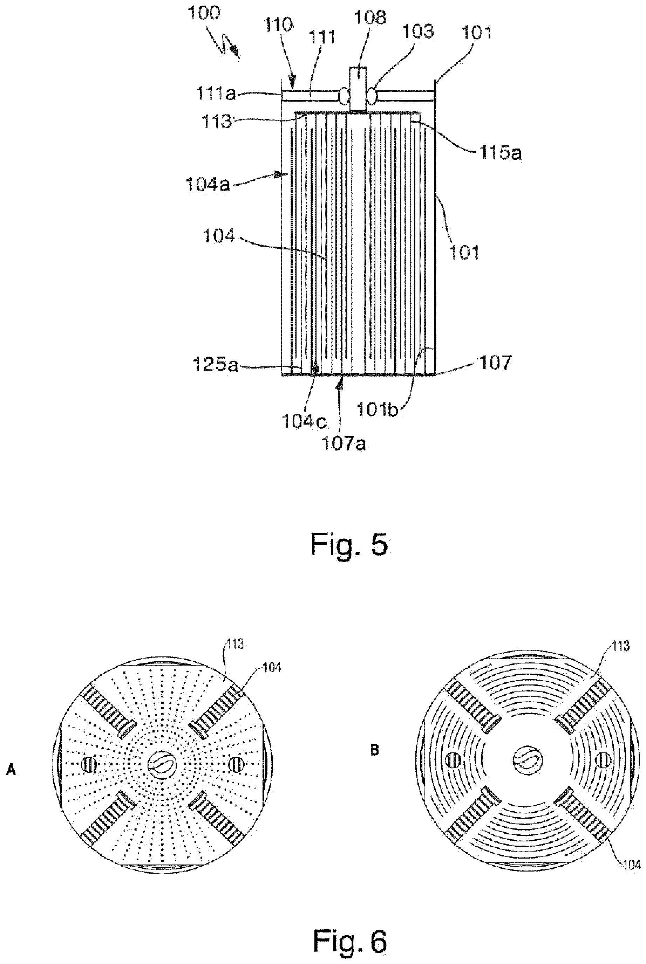

Die in **Fig. 5** dargestellte Energiespeicherzelle 100 ist ein weiteres Beispiel für die oben beschriebene dritte bevorzugte Erfindungsvariante. Sie umfasst den Elektroden-Separator-Verbund 104, der axial in das hohlzylindrisch ausgebildete Gehäuseteil 101 eingeschoben ist, so dass sein Wickelmantel 104a an der Innenseite 101b des rohrförmig ausgebildeten Gehäuseteils 101 anliegt. Der Elektroden-Separator-Verbund 104 umfasst eine bandförmige Anode und eine bandförmige Kathode, die spiralförmig aufgewickelt sind. Die Anode umfasst einen bandförmigen Anodenstromkollektor und einen bandförmigen Kathodenstromkollektor. Der Anodenstromkollektor ist mit einer Schicht aus negativem Elektrodenmaterial beladen. Der Kathodenstromkollektor ist mit einer Schicht aus positivem Elektrodenmaterial beladen.

Aus der obenliegenden Stirnseite 104b des als Wickel ausgebildeten Elektroden-Separator-Verbunds 104 tritt der Längsrand 115a des Anodenstromkollektors aus. Aus der untenliegenden Stirnseite 104c des als Wickel ausgebildeten Elektroden-Separator-Verbunds 104 tritt der Längsrand 125a des Kathodenstromkollektors aus.

Die Energiespeicherzelle 100 umfasst das rohrförmig und hohlzylindrisch ausgebildete, metallische Gehäuseteil 101. Das rohrförmig ausgebildete Gehäuseteil 101 ist Bestandteil eines metallischen Gehäusebechers 107, der einen kreisförmigen Boden 107a umfasst. Die obenliegende Öffnung des Gehäusebechers 107 ist durch die Metallscheibe 111 verschlossen, die derart in dem rohrförmig ausgebildeten Gehäuseteil 101 angeordnet ist, dass ihr Rand 111a entlang einer umlaufenden Kontaktzone an der Innenseite 101b des rohrförmig ausgebildeten Gehäuseteils 101 anliegt. Der Rand 111a der Metallscheibe 111 ist mit dem rohrförmig ausgebildeten Gehäuseteil 101 über eine umlaufende Schweißnaht verbunden.

Die Metallscheibe 111 ist Bestandteil eines Kontaktelements 110, das neben der Metallscheibe 111 das metallische Kontaktblech 113 und den Polstift 108 umfasst. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, liegt der Längsrand 115a unmittelbar an. Der Längsrand 115a ist mit dem Kontaktblech 113 durch Verschweißung verbunden. Der Polstift 108 ist an das Kontaktblech 113 geschweißt und durch eine zentrale Durchbrechung in der Metallscheibe 111 aus dem Gehäuse der Zelle 100 herausgeführt.

Das Kontaktelement 110 umfasstweiterhin das Isoliermittel 103, das den Polstift 108 und somit auch das mit dem Polstift verschweißte Kontaktblech 113 gegen die Metallscheibe 111 elektrisch isoliert.

Das untere Ende des Gehäusebechers 107 schließt mit dem kreisförmigen Boden 107a ab. An der innenliegenden Seite des Bodens 107a liegt der Längsrand 125a des Kathodenstromkollektors unmittelbar an. Der Längsrand 125a ist mit dem Boden 107a durch Verschweißung verbunden. Die Verschweißung kann beispielsweise mittels eines Laser durch den Boden 107a hindurch bewirkt werden.

Die in **Fig. 6** dargestellten Ausführungsbeispiele illustrieren Kontaktierungsvarianten zur Anbindung der Längsränder von Stromkollektoren mit spiralförmiger Struktur an ein Kontaktblech. Im Einzelnen:
A Hier ist liegt ein Längsrand eines Stromkollektors unmittelbar an einem Kontaktblech an und ist über eine Vielzahl von punktförmigen Schweißverbindungen mitdem Kontaktblech verbunden (sogenannte Multi-Pin-Verbindung).
B Hier ist ein Längsrand eines unmittelbar an einem Kontaktblech anliegenden Stromkollektors über eine Mehrzahl von Abschnitten, die jeweils über ihre gesamte Länge über eine Schweißnaht durchgehend mit dem Kontaktblech verbunden sind, an das Kontaktblech fixiert.

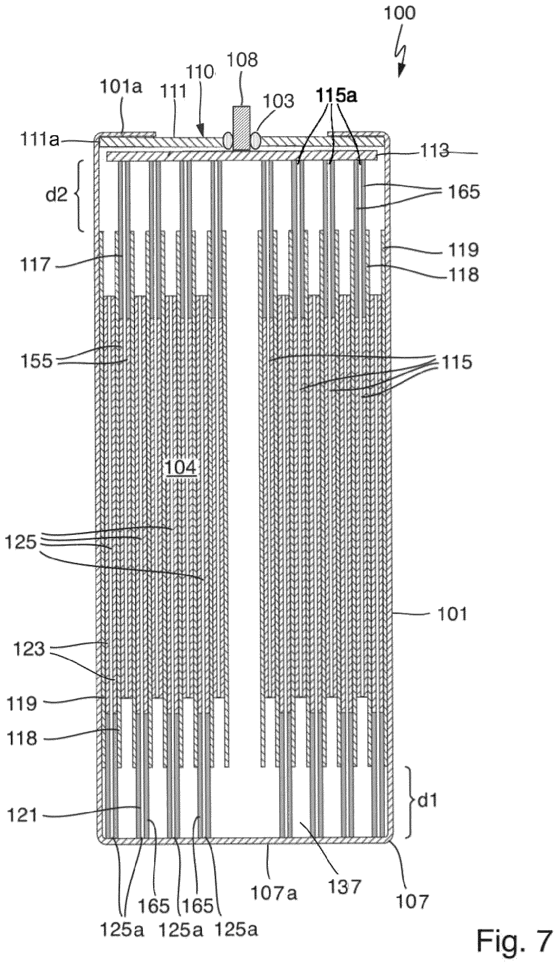

Die in **Fig. 7** dargestellte Energiespeicherzelle 100 umfasst ein hohlzylindrisch ausgebildetes Gehäuseteil 101, das Bestandteil des Gehäusebechers 107 ist, der den kreisförmigen Boden 107a sowie eine kreisförmige Öffnung (definiert durch den Rand 101a) umfasst. Bei dem Gehäusebecher 107 handelt es sich um ein Tiefziehteil. Der Gehäusebecher 107 schließt gemeinsam mit dem Kontaktelement 110, das die flache Metallscheibe 111 mit dem kreisförmigem Rand 111a umfasst, einen Innenraum 137 ein, in dem der als Wickel ausgebildete Elektroden-Separator-Verbund 104 axial ausgerichtet ist. Die Metallscheibe 111 ist derart in dem rohrförmig ausgebildeten Gehäuseteil 101 angeordnet, dass ihr Rand 111a entlang einer umlaufenden Kontaktzone an der Innenseite 101b des rohrförmig ausgebildeten Gehäuseteils 101 anliegt. Ihr Rand 111a entsprecht dem Rand des Kontaktelements und ist mit dem rohrförmig ausgebildeten Gehäuseteil 101 über eine umlaufende Schweißnaht verbunden. Der Rand 101a des rohrförmig ausgebildeten Gehäuseteils 101 ist radial (hier um ca. 90 °) nach innen über den Rand 110a des Kontaktelements 110 umgebogen.

Der Elektroden-Separator-Verbund 104 liegt in Form eines zylindrischen Wickels mit zwei endständigen Stirnseiten vor, zwischen denen sich der umlaufende Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind. Die zwei Stirnseiten des Elektroden-Separator-Verbunds 104 werden durch die Längsränder der Separatoren 118 und 119 gebildet. Aus diesen Stirnseiten ragen die Stromkollektoren 115 und 125 hervor. Die entsprechenden Überstände sind mit d1 und d2 bezeichnet.

Aus der oberen Stirnseite des Elektroden-Separator-Verbunds 104 tritt der Anodenstromkollektor 115 aus, aus der unteren Stirnseite der Kathodenstromkollektor 125. Der Anodenstromkollektor 115 ist in einem bandförmigen Hauptbereich mit einer Schicht aus einem negativen Elektrodenmaterial 155 beladen. Der Kathodenstromkollektor 125 ist in einem bandförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Neben der Metallscheibe 111 umfasst das Kontaktelement 110 weiterhin das Kontaktblech 113 und den Polstift 108. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, steht der Längsrand 115a über seine gesamte Länge in unmittelbarem Kontakt mit dem Kontaktblech 113 und damit mit dem Kontaktelement 110 und ist mit diesem mindestens über mehrere Abschnitte, bevorzugt über seine gesamte Länge, durch Verschweißung verbunden. Alternativ kann hier die oben beschriebene Multi-Pin-Verbindungvorliegen. Das Kontaktelement 110 dient somit gleichzeitig zur elektrischen Kontaktierung der Anode und als Gehäuseteil.

Der Polstift 108 ist an das Kontaktblech 113 geschweißt und durch eine zentrale Durchbrechung in der Metallscheibe 111 aus dem Gehäuse der Zelle 100 herausgeführt. Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert. Lediglich die Metallscheibe 111 steht in unmittelbarem und damit auch in elektrischem Kontakt mit dem Gehäusebecher 107. Der Polstift 108 und das Kontaktblech 113 sind gegen den Gehäusebecher isoliert.

Der Rand 125a des Kathodenstromkollektors 125 steht über seine gesamte Länge in unmittelbarem Kontakt mit dem Boden 107a und ist mit diesem mindestens über mehrere Abschnitte, bevorzugt über seine gesamte Länge, durch Verschweißung (insbesondere mit Hilfe eines Lasers) verbunden. Alternativ kann auch hier die oben beschriebene Multi-Pin-Verbindung vorliegen. Der Boden 107a dient somit nicht nur als Teil des Gehäuses sondern auch zur elektrischen Kontaktierung der Kathode.

## Patentansprüche

1. Lithium-lonen-Zelle (100) mit den Merkmalen
a. die Zelle umfasst einen Elektroden-Separator-Verbund (104) mit der Sequenz Anode / Separator / Kathode,
b. der Elektroden-Separator-Verbund (104) liegt in Form eines zylindrischen Wickels mit zwei endständigen Stirnseiten (104b, 104c) und einem dazwischen liegenden Wickelmantel (104a) vor,
c. die Zelle umfasst ein Gehäuse, das ein metallisches, rohrförmig ausgebildetes Gehäuseteil (101) mit einer endständigen kreisförmigen Öffnung (101c) umfasst,
d. in dem Gehäuse ist der als Wickel ausgebildete Elektroden-Separator-Verbund (104) axial ausgerichtet, so dass der Wickelmantel (104a) an der Innenseite (101b) des rohrförmig ausgebildeten Gehäuseteils (101) anliegt,
e. die Anode ist bandförmig ausgebildet und umfasst einen bandförmigen Anodenstromkollektor (115) mit einem ersten Längsrand (115a) und einem zweiten Längsrand und zwei Endstücken,
f. der Anodenstromkollektor (115) umfasst einen bandförmigen Hauptbereich, der mit einer Schicht aus negativem Elektrodenmaterial (155) beladen ist, sowie einen freien Randstreifen (117), der sich entlang des ersten Längsrands (115a) erstreckt und der nicht mit dem Elektrodenmaterial (155) beladen ist,
g. die Kathode ist bandförmigausgebildet und umfasst einen bandförmigen Kathodenstromkollektor (125) mit einem ersten Längsrand (125a) und einem zweiten Längsrand und zwei Endstücken,
h. der Kathodenstromkollektor (125) umfasst einen bandförmigen Hauptbereich, der mit einer Schicht aus positivem Elektrodenmaterial (123) beladen ist, sowie einen freien Randstreifen (121), der sich entlang des ersten Längsrands (125a) erstreckt und der nicht mit dem Elektrodenmaterial (123) beladen ist,
i. die Anode und die Kathode sind innerhalb des Elektroden-Separator-Verbunds (104) derart angeordnet, dass der erste Längsrand (115a) des Anodenstromkollektors (115) aus einer der endständigen Stirnseiten (104b, 104c) und der erste Längsrand (125a) des Kathodenstromkollektors (125) aus der anderen der endständigen Stirnseiten (104b, 104c) austritt,
j. die Zelle umfasst ein zumindest teilweise metallisch ausgebildetes Kontaktelement (110), das in unmittelbarem Kontakt mit einem der ersten Längsränder (115a, 125a) steht und das mit diesem Längsrand bevorzugt durch Verschweißung verbunden ist,
sowie den zusätzlichen kennzeichnenden Merkmalen
k. das Kontaktelement (110) umfasst einen kreisförmigen Rand (110a),
l. das Kontaktelement (110) verschließt die endständige kreisförmige Öffnung (101c) des rohrförmig ausgebildeten Gehäuseteils (101).

2. Zelle nach Anspruch 1 mit mindestens einem der folgenden zusätzlichen Merkmale:
a. Das Kontaktelement (110) ist oder umfasst eine Metallscheibe (111), deren Rand (111a) dem kreisförmigen Rand (110a) des Kontaktelements (110) entspricht oder diesen mitbildet.
b. Die Metallscheibe (111) ist derart in dem rohrförmig ausgebildeten Gehäuseteil (101) angeordnet, dass ihr Rand (111a) entlang einer umlaufenden Kontaktzone an der Innenseite (101b) des rohrförmig ausgebildeten Gehäuseteils (101) anliegt.
c. Der Rand (111a) der Metallscheibe (111) ist mit dem rohrförmig ausgebildeten Gehäuseteil (101) über eine umlaufende Schweißnaht verbunden.
d. Der eine der ersten Längsränder (115a, 125a) ist mit der Metallscheibe (111) durch Verschweißung verbunden.

3. Zelle nach Anspruch 1 mit einem der folgenden zusätzlichen Merkmale:
a. Das Kontaktelement (110) ist oder umfasst eine Metallscheibe (111), deren Rand (111a) dem kreisförmigen Rand (110a) des Kontaktelements (110) entspricht oder diesen mitbildet.
b. Die Metallscheibe (111) ist derart in dem rohrförmig ausgebildeten Gehäuseteil (101) angeordnet, dass ihr Rand (111a) entlang einer umlaufenden Kontaktzone an der Innenseite (101b) des rohrförmig ausgebildeten Gehäuseteils (101) anliegt.
c. Der Rand (111a) der Metallscheibe (111) ist mit dem rohrförmig ausgebildeten Gehäuseteil (101) über eine umlaufende Schweißnaht verbunden.
d. Das Kontaktelement (110) umfasst ein metallisches Kontaktblech (113) mit zwei Seiten, von denen eine in Richtung der Metallscheibe (111) weist und bevorzugt durch Verschweißung mit der Metallscheibe (111) verbunden ist.
e. Der eine der ersten Längsränder (115a, 125a) liegt unmittelbar an der anderen Seite des Kontaktblechs (113) an und ist mit diesem bevorzugt durch Verschweißung verbunden.

4. Zelle nach Anspruch 1 mit mindestens einem der folgenden zusätzlichen Merkmale:
a. Das Kontaktelement (110) ist oder umfasst eine Metallscheibe (111), deren Rand (111a) dem kreisförmigen Rand (110a) des Kontaktelements (110) entspricht oder diesen mitbildet.
b. Die Metallscheibe (111) ist derart in dem rohrförmig ausgebildeten Gehäuseteil (101) angeordnet, dass ihr Rand (111a) entlang einer umlaufenden Kontaktzone an der Innenseite (101b) des rohrförmig ausgebildeten Gehäuseteils (101) anliegt.
c. Der Rand (111a) der Metallscheibe (111) ist mit dem rohrförmig ausgebildeten Gehäuseteil (101) über eine umlaufende Schweißnaht verbunden.
d. Das Kontaktelement (110) umfasst ein metallisches Kontaktblech (113) mit zwei Seiten, von denen eine in Richtung der Metallscheibe (111) weist.
e. Das Kontaktelement (110) umfasst einen Polstift (108), der an dem Kontaktblech (113) fixiert ist und durch eine Durchbrechung in der Metallscheibe aus dem Gehäuse der Zelle herausgeführt ist.
f. Das Kontaktelement (110) umfasst mindestens ein Isoliermittel (103), das den Polstift (108) und/oder das Kontaktblech (113) gegen die Metallscheibe (111) elektrisch isoliert.
g. Der eine der ersten Längsränder (115a, 125a) liegt unmittelbar an der anderen Seite des Kontaktblechs (113) an und ist mit dieser bevorzugt durch Verschweißung verbunden.

5. Zelle nach einem der Ansprüche 2 bis 4 mit einem der folgenden zusätzlichen Merkmale:
a. Das rohrförmig ausgebildete Gehäuseteil (101) umfasst in axialer Richtung einen Zentralabschnitt (130), in dem der Wickelmantel (104a) an seiner Innenseite (101b) anliegt, sowie einen Kontaktabschnitt (135), in dem der Rand (111a) der Metallscheibe (111) an seiner Innenseite (101b) anliegt.
b. Das rohrförmig ausgebildete Gehäuseteil (101) umfasst einen kreisförmigen Rand (101a), der radial nach innen über den Rand (110a) des Kontaktelements (110) umgebogen ist.

6. Zelle nach einem der vorhergehenden Ansprüche mit mindestens einem der folgenden zusätzlichen Merkmale:
a. Das rohrförmig ausgebildete Gehäuseteil (101) ist Bestandteil eines Gehäusebechers (107), der einen kreisförmigen Boden (107a) umfasst.
b. Der andere der ersten Längsränder (115a, 125a) liegt unmittelbar an dem Boden (107a) an und ist mit dem Boden (107a) bevorzugt durch Verschweißung verbunden.

7. Zelle nach einem der Ansprüche 1 bis 5 mit mindestens einem der folgenden zusätzlichen Merkmale:
a. Das rohrförmig ausgebildete Gehäuseteil (101) weist eine weitere endständige kreisförmige Öffnung auf.
b. Die Zelle (100) umfasst ein Verschlusselement (145) mit einem kreisförmigen Rand (145a), das diese weitere endständige Öffnung verschließt.
c. Das Verschlusselement (145) für die weitere endständige Öffnung ist oder umfasst eine Metallscheibe, deren Rand dem kreisförmigen Rand (145a) des metallischen Verschlusselements (145) entspricht oder diesen mitbildet.

8. Zelle nach Anspruch 7 mit mindestens einem der folgenden zusätzlichen Merkmale:
a. Die Metallscheibe ist derart in dem rohrförmig ausgebildeten Gehäuseteil angeordnet, dass ihr Rand entlang einer umlaufenden Kontaktzone an der Innenseite (101b) des rohrförmig ausgebildeten Gehäuseteils (101) anliegt.
b. Der Rand der Metallscheibe ist mit dem rohrförmig ausgebildeten Gehäuseteil (101) über eine umlaufende Schweißnaht verbunden.
c. Das rohrförmig ausgebildete Gehäuseteil (101) umfasst einen kreisförmigen Rand (101a), der radial nach innen über den Rand (145a) des Verschlusselements (145), insbesondere den Rand der Metallscheibe, umgebogen ist.

9. Zelle nach Anspruch 8 mit einem der folgenden zusätzlichen Merkmale:
a. Der andere der ersten Längsränder (115a, 125a) liegt unmittelbar an der Metallscheibe an und ist mit der Metallscheibe bevorzugt durch Verschweißung verbunden.
b. Der andere der ersten Längsränder ist an ein Kontaktblech (113) geschweißt, das unmittelbar an der Metallscheibe anliegt.

10. Verfahren zur Herstellung einer Energiespeicherzelle (100) nach einem der vorhergehenden Ansprüche umfassend die Schritte
a. Bereitstellung eines Elektroden-Separator-Verbunds (104) mit der Sequenz Anode / Separator / Kathode, der in Form eines zylindrischen Wickels mit zwei endständigen Stirnseiten (104b, 104c) und einem dazwischen liegenden Wickelmantel (104a) vorliegt, wobei die Elektroden jeweils einen mit einem Elektrodenmaterial beschichteten Stromkollektor (115, 125) mit einem ersten Längsrand (115a, 125a) und einem zweiten Längsrand und zwei Endstücken aufweisen und einer der Längsränder (115a, 125a) aus einer der endständigen Stirnseiten (104b, 104c) austritt,
b. Bereitstellung eines rohrförmig ausgebildeten Gehäuseteils (101), das eine endständige kreisförmige Öffnung (101c) aufweist,
c. Bereitstellung eines zumindest teilweise metallisch ausgebildeten Kontaktelements (110), das einen kreisförmigen Rand (110a) aufweist,
d. Verschweißen des einen aus der Stirnseite austretenden Längsrands (115a, 125a) mit dem Kontaktelement (110) oder einer metallischen Komponente des Kontaktelements (110),
e. Einschieben des Elektroden-Separator-Verbunds (104) mitsamt dem Kontaktelement (110) durch die kreisförmige Öffnung (101c) in das rohrförmig ausgebildete Gehäuseteil (101), so dass der Wickelmantel (104a) an der Innenseite (101b) des rohrförmig ausgebildeten Gehäuseteils (101) anliegt und der Rand (110a) des Kontaktelements (110) entlang einer umlaufenden Kontaktzone an der Innenseite (101b) des rohrförmig ausgebildeten Gehäuseteils (101) anliegt, und
f. Fixieren des Randes (110a) des Kontaktelements (110) an der Innenseite (101b) des rohrförmig ausgebildeten Gehäuseteils (101).

11. Verfahren nach Anspruch 10, **gekennzeichnet durch** mindestens eines der folgenden zusätzlichen Merkmale und Schritte:
a. Das Fixieren erfolgt mittels Verschweißung, Verlötung oder Verklebung.
b. Nach dem Fixieren wird der Öffnungsrand (101a) der endständigen kreisförmigen Öffnung (101c) radial nach innen über den Rand (110a) des Kontaktelements (110) umgebogen.

12. Verfahren nach einem der Ansprüche 10 oder 11, **gekennzeichnet durch** mindestens einen der folgenden zusätzlichen Schritte:
a. Der Elektroden-Separator-Verbund (104) wird mit einem Elektrolyten getränkt, wobei der Elektrolyt durch eine dafür vorgesehene Durchbrechung (114) in dem Kontaktelement (110) oder einem anderen Gehäuseteil eingefüllt wird.
b. Nach dem Einfüllen des Elektrolyten wird die Durchbrechung (114) verschlossen, beispielsweise durch Verklebung oder Verschweißung.
c. Der Verschluss erfolgt unter Verwendung einer Überdrucksicherung (120).
